# EUROPEAN PATENT SPECIFICATION

(11) **EP 1 750 043 B1**
(45) Date of publication and mention of the grant of the patent: **16.04.2008**
(21) Application number: 05425581.5
(22) Date of filing: 04.08.2005
(51) Int. Cl.: F16K 17/10

(54) **A device for controlling pressure, in particular but not exclusively for hydraulic piloting of an overpressure valve**
Eine Vorrichtung für das Steuern des Drucks, insbesondere aber nicht ausschließlich für das hydraulische Steuern eines Überdruckventils
Un dispositif pour commander la pression, en particulier mais pas exclusivement pour le pilotage hydraulique d'une valve de surpression

(43) Date of publication of application: 07.02.2007
(73) Proprietor: Bosch Rexroth Oil Control S.p.A., 20149 Milano (MI) (IT)
(72) Inventor: Storci, Andrea, 41015 Nonantola (Modena) (IT)
(74) Representative: Gotra, Stefano

(56) References cited:
- DE-A1- 10 120 643
- US-A- 4 351 356
- US-A- 5 400 817
- US-A1- 2003 111 114

## Description

### Description.

The invention relates in particular to a device for pressure control internally of a controlled chamber. Known-type devices generally comprise a discharge channel which extends between a controlled chamber and at least a discharge outlet, placing them in communication. A small piston slides along the discharge channel between at least a closed position, in which it occludes the discharge channel, and at least an open position, in which the discharge channel is open and enables a flow of fluid from the controlled chamber to the discharge outlet. Elastic means are predisposed to push and keep the piston in the closed position, exerting a predetermined force on the piston.

In the closed position the piston is generally arranged in contact with a sealed seating internally of the discharge channel and presents a sealed surface against the pressure internally of the controlled chamber which sealed surface is equal to the surrounding section of the sealed seating. When the pressure internally of the controlled chamber exceeds a certain value, the overall force exerted on sealed surface exceeds the force exerted by the elastic means and the piston moves, displacing from the sealed seating. In this condition the fluid is free to run along the discharge channel up to the discharge outlet, and the internal pressure in the controlled chamber decreases down to a level which enables the piston to return to the closed position.

In known-type devices like, for example, US 4, 351, 356, the pressure needed to keep the piston in the open position is more or less equal to the pressure necessary for causing the piston to displace from the sealed seating. This represents a drawback when the device for controlling the pressure is used to effect piloting of an overpressure valve. In some applications the overpressure valve, once open, is deliberately made to remain in the open configuration for pressure values which are decidedly lower than the pressure value that actually opened the valve. In the prior art this need can be satisfied only by bringing considerable structural complications to the overpressure valves or by the use of numerous valves, connected up to one another, in especially complex hydraulic circuits.

The main aim of the present invention is to provide a device for controlling pressure, in particular, though not exclusively, for hydraulic piloting of an overpressure valve, in which the pressure needed to keep the device open is lower than the pressure required for opening the valve.

Further characteristics and advantages of the device of the present invention will better emerge from the detailed description that follows, made with reference to the appended figures of the drawings, given as nonlimiting examples, and in which:
Figure 1 is a longitudinal section of the device of the invention, in combination with an overpressure valve;
Figure 2 is a detail in enlarged-scale of the device of figure 1;
Figures 3 and 4 are two successive stages of the operation of the device of figure 2;
Figure 5 is a hydraulic device in which the device of the invention is usefully applied;
Figure 6 is a diagram representing in time-pressure coordinates the functioning principle of the device of the invention.

With reference to the figures of the drawings, the device of the invention is shown in a preferred application, i.e. in association with an overpressure valve. The device can, however, be used in combination with any valve or device where it is required that in a predetermined chamber or environment the pressure drops when it has reached a predetermined level.

The device for controlling pressure is illustrated in association with an overpressure valve. The valve comprises an inlet chamber 21 for an operator fluid, provided with at least a first discharge opening 22 and a controlled chamber 23, which functions as a piloting chamber, in communication with the inlet chamber 21.

An obturator 24 is arranged between the inlet chamber 21 and the controlled chamber 23 and is slidable, by effect of a pressure difference between the inlet chamber and the controlled chamber 23, between a closed position, in which it closes the first discharge opening 22, and at least an open position, in which it at least partially opens the first discharge opening 22. The obturator 24 is sealedly slidable internally of a hollow body 25 which is provided with a cylindrical cavity which is coaxial to a longitudinal axis x, on the lateral wall 25a of which the first discharge opening 22 is located. Preferably several discharge openings 22, arranged along a circumference, are made through the lateral wall 25a of the hollow body 25 cavity. In its sliding movement the obturator 24, which exhibits a cylindrical shape and is coaxial to the axis x, can be arranged in front of the discharge openings 22, closing the openings themselves, or it can be arranged in such a way as to free the openings either partially or fully. In the figures of the drawings, the obturator 24 is represented in the closed position in which it closes the openings 22. In particular, the obturator is shown in an endrun position in which a seal ring 26, housed in a circular channelling afforded on the lateral surface of the obturator, abuts against a shoulder 27 which projects from the lateral surface 25a of the cavity of the hollow body 25. From this position the obturator 24 can slide only towards the controlled chamber 23 up until it progressively frees the openings 22.

First elastic means 51, preferably a helix spring, are predisposed to push the obturator 24 towards the closed position. The spring 51 is arranged preferably internally of the controlled chamber 23, between the obturator 24 and a shaped body 12 which superiorly delimits the controlled chamber 23. In particular, at least an end of the spring 51 houses in a seating 28 afforded internally of the obturator 24.

At least a through-channel 29 is afforded internally of the obturator 24 and places the inlet chamber 21 in communication with the controlled chamber 23. The through-channel 29 has a relatively small section so that only a small flow of oil can pass through it. The channel 29 has the function of a static pressure opening so that, when the valve is working under normal conditions with the obturator 24 in the closed position, there is the same pressure in the inlet chamber 21 and the controlled chamber 23. Preferably the channel 29 exhibits a plurality of branches which conjoin in a single channel which terminates internally of the seating 28, i.e. with the aim of limiting the risk that the extraneous bodies or impurities present in the operating fluid might completely occlude the channel 29.

The device of the invention, which is illustrated herein in a preferred but not exclusive embodiment, comprises a discharge channel 2 which extends between the controlled chamber 23, which in the illustrated example is also the valve pilot chamber, and at least a discharge opening 3, placing them in communication.

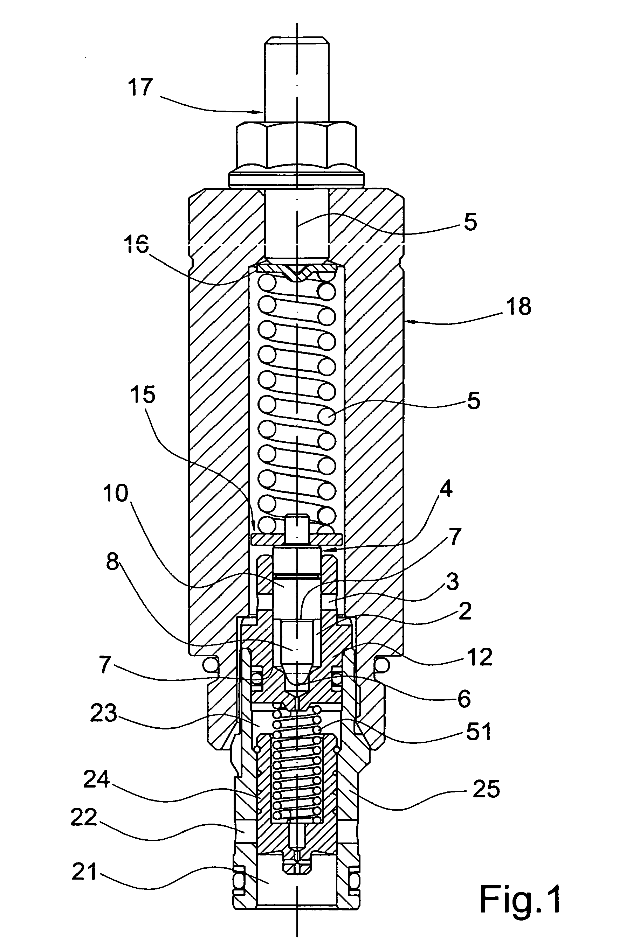

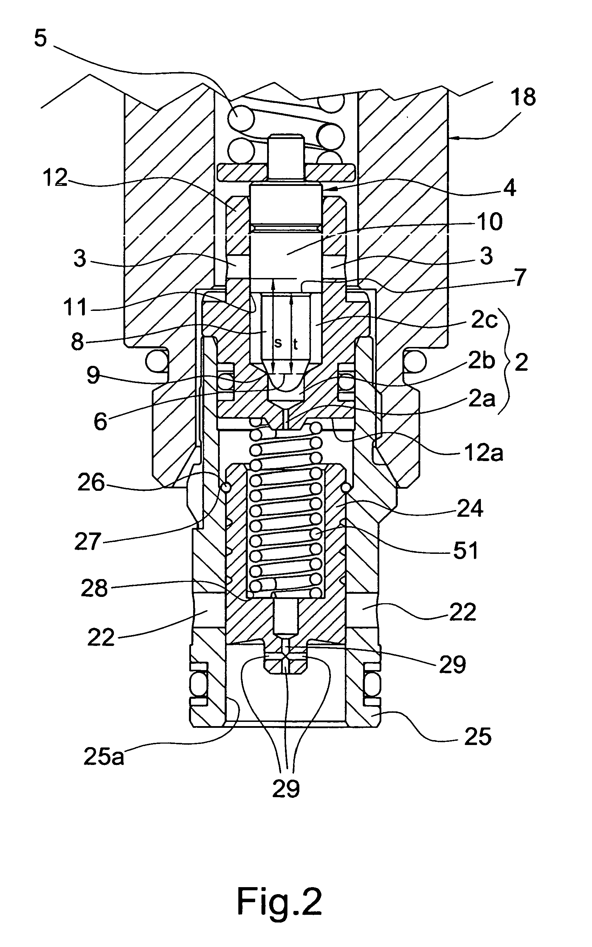

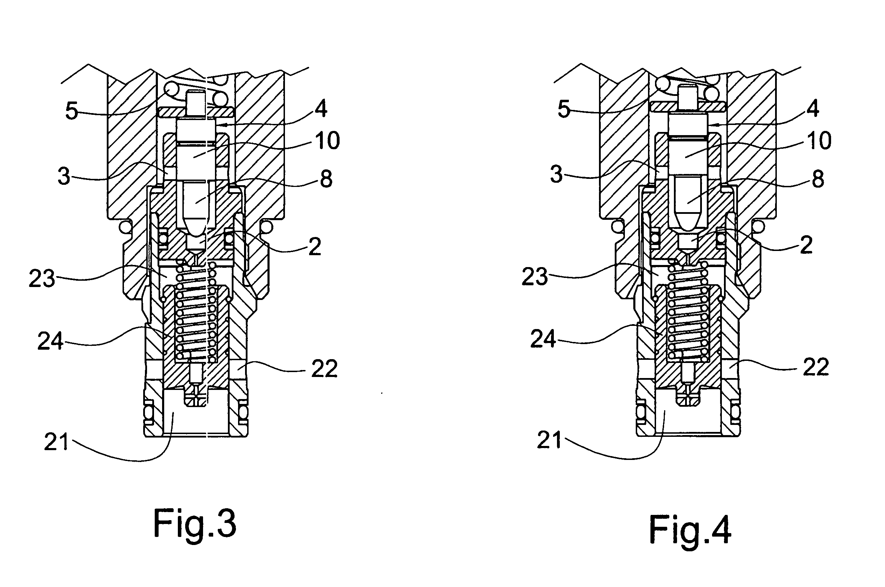

A piston 4 is slidable along the discharge channel 2 between at least a closed position (figures 1 and 2) in which the piston 4 occludes the discharge channel 2, and at least an open position (figure 4) in which the discharge channel 2 is open and enables a flow of fluid from the controlled chamber 23 to the discharge opening 3. Elastic means 5, preferably a helix spring, are predisposed to push the piston 4 towards the closed position. Preferably the helix spring 5 has a first end which is arranged in contact with a platelet 15 which is solidly constrained to the piston 4 for movements directed along the longitudinal axis x. The second end of the spring 5 is arranged in contact with a second platelet 16 a position of which along the longitudinal axis x can be regulated by means of a screw 17, so that an intensity of the thrust exerted by the spring 5 is adjustable. The spring 5 is housed internally of a cylindrical body 18, coaxial to the longitudinal axis x, which is associated to the shaped body 12 and the hollow body 25.

The piston 4 exhibits a first transversal section 6 which, in the closed position of the piston 4, occludes the discharge channel 2 and is exposed to the pressure existing internally of the controlled chamber 23. The first transversal section 6 is defined by a first shaped portion 8 of the piston 4. The first portion 8, in the piston 4 closed position, is predisposed to strike on a sealed seating 9 internally arranged in the discharge channel 2 in order to define a frontal surface of equal area to the transversal section of the first portion 8, surrounded by the contact line between the first portion 8 and the sealed seating 9. This frontal surface, which constitutes the first transversal section 6, is the surface on which the pressure in the controlled chamber 23 acts, generating an overall force directed along the longitudinal axis x and opposing the force exerted by the elastic means 5. In the piston 4 open position the first portion 8 is distanced from the sealed seating 9. Preferably the first portion 8 exhibits a conical conformation, arranged in such a way that the apex is positioned across the sealed seating 9.

The piston 4 further exhibits a second transversal section 7, having a larger surface with respect to the first transversal section 6 which, in the piston 4 closed position, occludes the discharge channel 2. In particular the second transversal section 7 is delimited by a front edge 11 of a second portion 10 of the piston 4, which front edge 11 is cylindrically conformed. The second portion 10 sealedly slides in a tract of the discharge channel 2 and is provided with a front edge 11 which slides contactingly against the lateral surface of the discharge channel 6. Preferably the discharge channel 2 exhibits a cylindrical conformation which is coaxial to the longitudinal axis x and is afforded internally of a shaped body 12, preferably axialsymmetric with respect to the longitudinal axis x. The discharge channel 2 comprises a first tract 2a which terminates in the controlled chamber 23, a second tract 2b, contiguous to the first tract 2a and having a greater section than the first tract 2a, a third tract 2c, contiguous and having a larger section than the second tract 2b and separated from the second tract 2b by the sealed seating 9. One or more discharge openings 3 are arranged on the lateral surface of the discharge channel 2.

The second portion 10 of the piston 4 is conformed in such a way that, in the piston 4 closed position (figures 1, 2 and 3) it closes the discharge opening 3, while in the piston 4 open position (figure 4) it frees the discharge opening 3.

The first and second transversal sections are arranged in such a way that during the sliding of the piston 4 from the closed position towards the open position, the second transversal section 7 frees the discharge channel 2 after the first transversal section 6. This arrangement of the transversal sections 6 and 7 is obtained by associated the second portion 10 of the piston 4 to the first portion 8 by means of a stem a length of which is such that, in the closed position of the piston 4, the minimum distance s separating the discharge opening 3 from the sealed seating 9 is greater than the distance t which separates the front edge 11 from the sealed seating 9 (figure 2). Preferably the piston 4 exhibits overall a cylindrical shape made up of tracts of differing sections, i.e. the first and second portions 8 and 10 and the stem which connects them.

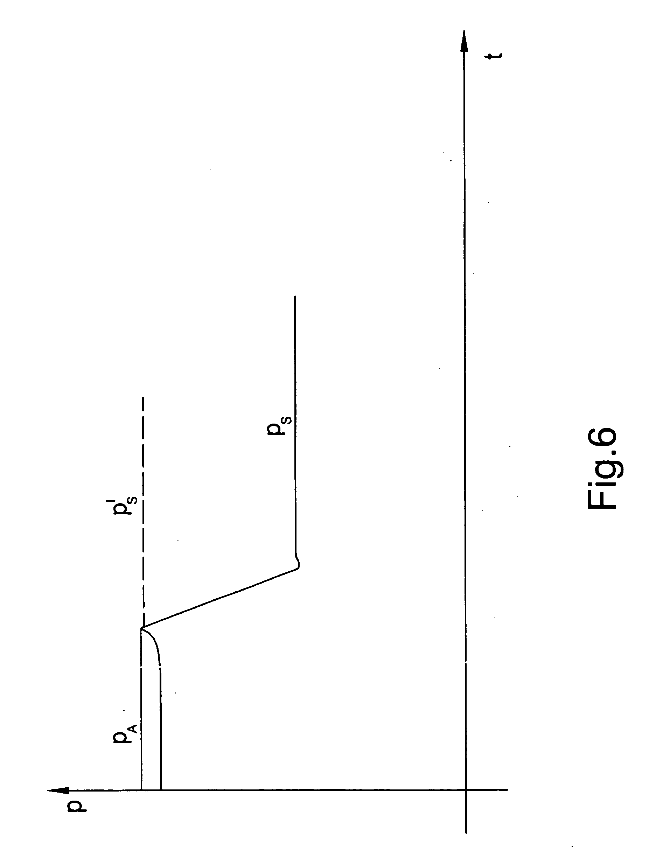

The sliding of the piston 4 from the closed position towards the open position is illustrated in figures 2, 3 and 4. In figure 2 (and figure 1), the closed position of the piston 4 is illustrated. In this position the first portion 8 is against the sealed seating 9 and the discharge channel 2 is occluded. If the pressure internally of the controlled chamber 23 increases beyond a predetermined level, the force which is generated at the first transversal section 6 exceeds the antagonist force developed by the elastic means 5 which act on the piston 4 which begins moving, detaching from the sealed seating 9. The pressure needed for determining the displacement of the piston 4 from the sealed seating 9, denoted by the peak illustrated in the diagram of figure 6, is such that the product between the pressure and the area of the first transversal section 6 exceeds the value of the force exerted by the elastic means 5.

As soon as the piston 4 detaches from the sealed seating 9 (figure 3), the fluid inside the controlled chamber 4, passing through a first tract 2a of the discharge channel 2, penetrates internally of the second transversal section 7, which is occluded by the second transversal section 7. As the second transversal section 7 exhibits a larger area than the first transversal section 6, the overall surface on which the fluid exerts its pressure increases. To overcome the force exerted by the elastic means 5 a smaller pressure is necessary, so that the pressure internally of the discharge channel 2 and the controlled chamber 23 decreases. The piston 4 continues to slide up until it reaches the open position at which the discharge opening 3 or openings 3 are opened and the fluid is free to exit from the device. It is important to stress that the piston 4 remains in the open position with a pressure inside the discharge chamber 23 and the discharge channel 2 that are lower than the value which determined the displacement of the piston 4 from the sealed seating 9.

The behaviour of the device for controlling pressure of the present invention is represented in pressure (p) and time (t) coordinates in the diagram of figure 6. Value ρ_{A} indicates the pressure value determining the displacement of the piston 4 from the sealed seating 9. Value ρ_{S} indicates the pressure value needed to cause further displacement of the piston 4 up to the opening of the discharge openings. Pressure ρₛ is the discharge pressure of the device and is present in the controlled chamber 23 and in the discharge channel 2 in the configurations represented in figures 3 and 4. The relation between ρ_{A} and ρₛ is in a first approximation proportional to the relation between the areas of the second transversal section 7 and the first transversal section 6. The broken line indicated by ρ¹ₛ represents the functioning of a known-type device in which it is clear that the discharge pressure substantially coincides with the opening pressure of the device.

In the illustrated embodiment, the drop in pressure internally of the second tract 2b of the channel 2 induces a drop in pressure internally of the controlled chamber 23, i.e. in the pilot chamber of the overpressure valve, which causes a displacement of the obturator 24 towards the controlled chamber 23 itself. The displacement of the obturator 24 frees the first discharge openings 22 through which the fluid in the inlet chamber 21 exits from the valve and the circuit. This leads to a drop in pressure internally of the inlet chamber 21, the controlled chamber 23 and the discharge chamber 2. When the pressure drops below a level at which the product between the pressure value and the area of the second transversal section 7 is lower than the thrust exerted by the elastic means 5, the piston 4 is brought into the closed position. Also the pressure in the controlled chamber increases until it reaches a value at which the thrust exerted on the obturator 24, in addition to the thrust exerted by the first elastic means 51, is not sufficient to return the obturator 24 into the closed position thereof.

The hollow body 25 is associated to the shaped body 12 coaxially with respect to the longitudinal axis x, so that the controlled chamber 23 is delimited by a bottom surface 12a of the shaped body 12, by the lateral surface 25a of the cylindrical cavity of the hollow body 25 and by the obturator 24. Alternatively the hollow body 25 can be replaced by a cylindrical seating afforded internally of another component.

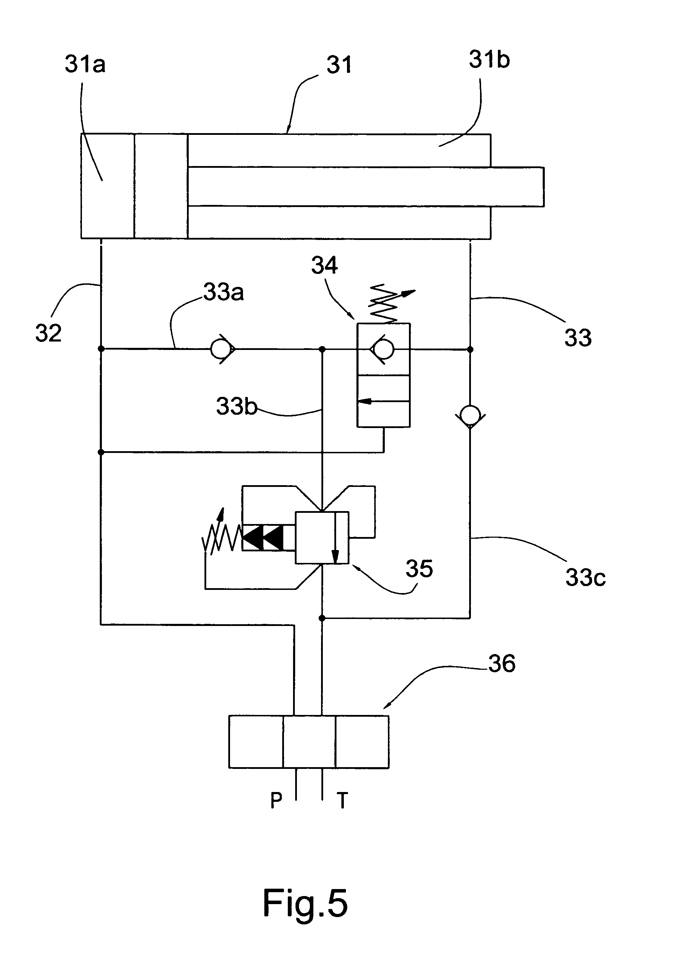

The characteristics of the device of the present invention are especially advantageous in a case in which the device is used, in combination with an overpressure valve, in a circuit of a type as represented in figure 5. This circuit represents a hydraulic device for exerting a force in which a hydraulic actuator 31, for example a cylinder, exhibits at least a first chamber 31a and at least a second chamber 31b which, filled with fluid under pressure through respective conduits, 32, 33, control the exertion of a force along two opposite directions (in the illustrated embodiment the extension and return directions of the cylinder stem). The second conduit 33 exhibits a first branch 33a that conjoins with the first conduit 32 and a second branch 33b which conjoins with the distributor 36 which controls the sending of the fluid to the two conduits. A third branch 33c conjoins directly to the distributor 36 and is provided with a single-acting valve which enables flow from the distributor 36 towards the second chamber 31b. With reference to the output flow of the fluid from the second chamber 3b, upstream of the branching of the branches 33a, 33b of the second conduit 33 is located a check valve 34 which is piloted to open by the pressure present internally of the first conduit 33. When pressurised fluid is sent to the first chamber 31a, the valve 34 is piloted to open and the fluid that exits the second chamber 31b reaches the first conduit 32, increasing the fluid flow rate coming from the pump. This considerably increases the outwards velocity of the cylinder stem. However this functioning, in which the check valve 34 is open and places the second chamber 31 b in communication with the first chamber 31a also involves a reduction in the thrust capacity of the cylinder, inasmuch as, the pressure at the sides of the piston coinciding, the thrust developed corresponds to the product between the pressure inside the first chamber 31a and only the transversal section of the cylinder stem.

To increase the thrust capacity of the cylinder, on the second branch 33b of the second conduit 33 there is an overpressure valve 35 according to the present invention. When the thrust demanded of the cylinder brings the pressure in the first and second chambers 31a, 31 b to a value higher than the calibrated value of the valve 35, the valve itself opens, causing the pressure inside the second conduit 33 and the second chamber 31b to decrease, in the ways described herein above. When the valve 35 opens, the fluid flow rate to the first chamber 31a diminishes as the fluid exiting from the second chamber 31b discharges. Consequently the stem diminishes its outwards velocity, but the thrust exerted by the cylinder increases as the pressure in the second chamber 31b decreases.

## Claims

1. A device for controlling pressure, in particular but not exclusively for hydraulic piloting of an overpressure valve, comprising:
a discharge channel (2) which extends between a controlled chamber (23) and at least a discharge opening (3), placing the controlled chamber (23) and discharge opening (3) in reciprocal communication;
a piston (4) which is slidable along the discharge channel (2) between at least a closed position of the piston (4), in which the piston (4) occludes the discharge channel (2) and a least an open position thereof, in which the discharge channel (2) is open and allows a flow of fluid from the controlled chamber (23) to the discharge opening (3);
elastic means (5), predisposed to push the piston (4) towards the closed position;
**characterised in that:** the piston (4) exhibits a first transversal section (6) which, in the closed position of the piston (4) occludes the discharge channel (2) and is exposed to the pressure present inside the controlled chamber (23), and a second transversal section (7), having a surface which is larger than the first transversal section (6), which in the closed position of the piston (4) occludes the discharge channel (2); the first transversal section (6) and the second transversal section (7) are arranged in such a way that, during the sliding of the piston (4) from the closed position thereof to the open position thereof, the second transversal section (7) frees the discharge channel (2) subsequently to the first transversal section (6).

2. The device of claim 1, **characterised in that** the piston (4) exhibits a first portion (8) which, in the closed position of the piston (4), is predisposed to strike in a sealed seating (9) internal of the discharge channel (2) in such a way as to define the first transversal section (6), while in the open position of the piston (4) the first portion (8) is distanced from the sealed seating (9).

3. The device of claim 2, **characterised in that** the first portion (8) exhibits a conical conformation and is arranged in such a way that an apex of the conical conformation is positioned across the sealed seating (9).

4. The device of any one of the preceding claims, **characterised in that** the piston (4) exhibits a second portion (10) having a cylindrical conformation, which second portion (10) is sealedly slidable inside a tract of the discharge channel (2) and is provided with a front edge (11) which slides in contact with the lateral surface of the discharge channel (6) and delimits the second transversal section (7).

5. The device of claim 4, **characterised in that** the second portion (10) of the piston (4) is conformed in such a way that, in the closed position of the piston (4), the second portion (10) closes the discharge opening (3), while in the open position of the piston (4) the second portion (10) frees the discharge opening (3).

6. The device of claim 5, **characterised in that** the second portion (10) of the piston (4) is associated to the first portion (8) by means of a stem, a length of which stem is such that, in the closed position of the piston (4) a minimum distance separating the discharge opening (3) from the sealed seating (9) is greater than a distance separating the front edge (11) from the sealed seating (9).

7. The device of at least one of claims from 2 to 6, **characterised in that** the discharge channel (2) is afforded internally of a shaped body (12) having axialsymmetric shape, and comprises a first tract (2a) which terminates in the controlled chamber (23), a second tract (2b), contiguous to and having a greater section than the first tract (2a), a third tract (2c), contiguous to and having a greater section than the second tract (2b) and separated from the second tract (2b) by the sealed seating (9).

8. The device of at least one of the preceding claims, **characterised in that** the at least a discharge opening (3) is arranged on the lateral surface of the discharge channel (2).

9. The device of at least one of the preceding claims, **characterised in that** an intensity of a thrust exerted by the elastic means (5) is adjustable.

10. An overpressure valve, comprising:
an inlet chamber (21) having at least a first discharge opening (22);
a controlled chamber (23) in communication with the inlet chamber (21);
an obturator (24) arranged between the inlet chamber (21) and the controlled chamber (23), which obturator (24) is slidable by effect of a pressure difference between the inlet chamber and the controlled chamber (23) between a closed position, in which the obturator (24) closes the first discharge opening (22) and at least an open position, in which the obturator (24) at least partially opens the first discharge opening (22);
first elastic means (51), predisposed to push the obturator (24) towards the closed position.;
**characterised in that** it comprises a pilot device according to at least one of the preceding claims.

11. The valve of claim 10, **characterised in that** the obturator (24) is sealedly slidable internally of a hollow body (25) affording a cylindrical cavity, on a lateral wall (25a) of which cylindrical cavity the first discharge opening (22) is arranged.

12. The valve of claim 10 or 11, **characterised in that** a through channel (29) is afforded in the obturator (24) to place the inlet chamber (21) in communication with the controlled channel (23).

13. The valve of at least one of the claims from 10 to 12, **characterised in that** the elastic means (51) are arranged internally of the controlled channel (23) between a seating (28) afforded in the obturator (24) and a bottom surface (12a) of a shaped body (12).

14. The valve of at least one of claims from 7 to 13, **characterised in that** the hollow body (25) is associated coaxially of the shaped body (12) in such a way that the controlled chamber (23) is delimited by a bottom surface (12a) of the shaped body (12), by the lateral surface (25a) of the cylindrical cavity of the hollow body (25), and by the obturator (24).

15. A hydraulic device for exerting a force, comprising a hydraulic actuator (31), which hydraulic actuator (31) comprises at least a first chamber (31a) and at least a second chamber (31b), a first conduit (32) for sending and discharging a pressurised fluid to the first chamber (31a), a second conduit (33) for sending and discharging pressurised fluid to the second chamber (31b), the second conduit being provided with a check valve (34) downstream of which, with reference to an outflow of the fluid from the second chamber (31 b), the second conduit (33) branches into a first branch (33a), which conjoins with the first conduit (32), and into a second branch (33b), which conjoins with a distributor (36), **characterised in that** it comprises an overpressure valve (35) according to at least one of claims from 10 to 14, arranged on the second branch (33b) of the second conduit (33).

## Patentansprüche

1. Vorrichtung zum Steuern des Druckes, insbesondere, jedoch nicht ausschliesslich, zum hydraulischen Steuern eines Überdruckventils, enthaltend:
- einen Ablasskanal (2), welcher sich zwischen einer Regelkammer (23) und wenigstens einer Ablassöffnung (3) erstreckt und die Regelkammer (23) und die Ablassöffnung (3) miteinander in Verbindung bringt;
- einen Kolben (4), welcher verschiebbar ist entlang dem Ablasskanal (2) zwischen wenigstens einer geschlossenen Position des Kolbens (4), in welcher der Kolben (4) den Ablasskanal (2) verschliesst, und wenigstens einer geöffneten Position desselben, in welcher der Ablasskanal (2) geöffnet ist und das Fliessen einer Flüssigkeit von der Regelkammer (23) zu der Ablassöffnung (3) erlaubt;
- elastische Mittel (5), vorgesehen zum Schieben des Kolbens (4) in Richtung der geschlossenen Position;
**dadurch gekennzeichnet, dass** der Kolben (4) einen ersten querverlaufenden Abschnitt (6) aufweist, welcher in der geschlossenen Position des Kolbens (4) den Ablasskanal (2) verschliesst und dem Druck ausgesetzt ist, vorhanden im Inneren der Regelkammer (23), sowie einen zweiten querverlaufenden Abschnitt (7), der eine Oberfläche hat, die grösser ist als die des ersten querverlaufenden Abschnittes (6), welche in der geschlossenen Position den Ablasskanal (2) verschliesst; wobei der erste querverlaufende Abschnitt (6) und der zweite querverlaufende Abschnitt (7) auf solche Weise angeordnet sind, dass während des Verschiebens des Kolbens (4) aus der geschlossenen Position desselben in die geöffnete Position desselben der zweite querverlaufende Abschnitt (7) den Ablasskanal (2) im Anschluss an den ersten querverlaufenden Abschnitt (6) freigibt.

2. Vorrichtung nach Patentanspruch 1, **dadurch gekennzeichnet, dass** der Kolben (4) ein erstes Teilstück (8) aufweist, welches in der geschlossenen Position des Kolbens (4) dazu vorgesehen ist, in einem abgedichteten Sitz (9) im Inneren des Ablasskanals (2) auf solche Weise anzuliegen, dass der erste querverlaufende Abschnitt (6) gebildet wird, während in der geöffneten Position des Kolbens (4) das erste Teilstück (8) von dem abgedichteten Sitz (9) entfernt ist.

3. Vorrichtung nach Patentanspruch 2, **dadurch gekennzeichnet, dass** das erste Teilstück (8) eine kegelförmige Ausbildung aufweist und auf solche Weise angeordnet ist, dass eine Spitze der kegelförmigen Ausbildung durch den abgedichteten Sitz (9) gehend positioniert ist.

4. Vorrichtung nach einem beliebigen der vorstehenden Patentansprüche, **dadurch gekennzeichnet, dass** der Kolben (4) ein zweites Teilstück (10) von einer zylindrischen Ausbildung aufweist, welches zweite Teilstück (10) dicht abschliessend im Inneren einer Strecke des Ablasskanals (2) verschiebbar und mit einer vorderen Kante (11) versehen ist, welche im Kontakt mit der seitlichen Oberfläche des Ablasskanals (2) gleitet und den zweiten querverlaufenden Abschnitt (7) abgrenzt.

5. Vorrichtung nach Patentanspruch 4, **dadurch gekennzeichnet, dass** das zweite Teilstück (10) des Kolbens (4) auf solche Weise ausgebildet ist, dass in der geschlossenen Position des Kolbens (4) das zweite Teilstück (10) die Ablassöffnung (3) verschliesst, während in der geöffneten Position des Kolbens (4) das zweite Teilstück (10) die Ablassöffnung (3) freigibt.

6. Vorrichtung nach Patentanspruch 5, **dadurch gekennzeichnet, dass** das zweite Teilstück (10) des Kolbens (4) dem ersten Teilstück (8) mit Hilfe eines Schaftes zugeordnet ist, von welchem Schaft die Länge solche ist, dass in der geschlossenen Position des Kolbens (4) ein minimaler, die Ablassöffnung (3) von dem abgedichteten Sitz (9) trennender Abstand grösser ist als ein die vordere Kante (11) von dem abgedichteten Sitz (9) trennender Abstand.

7. Vorrichtung nach einem der Patentansprüche von 2 bis 6, **dadurch gekennzeichnet, dass** der Ablasskanal (2) im Inneren eines geformten Körpers (12) aufgewiesen ist, der eine axialsymmetrische Form hat, und eine erste Strecke (2a) enthält, welche in der Regelkammer (23) mündet, eine zweite Strecke (2b), anschliessend an die erste Strecke (2a) und von einem grösseren Querschnitt als diese, und eine dritte Strecke (2c), anschliessend an die zweite Strecke (2b) und von einem grösseren Querschnitt als diese und getrennt von der zweiten Strecke (2b) durch den abgedichteten Sitz (9).

8. Vorrichtung nach wenigstens einem der vorstehenden Patentansprüche, **dadurch gekennzeichnet, dass** die wenigstens eine Ablassöffnung (3) an der seitlichen Oberfläche des Ablasskanals (2) angeordnet ist.

9. Vorrichtung nach wenigstens einem der vorstehenden Patentansprüche, **dadurch gekennzeichnet, dass** die Stärke eines durch die elastischen Mittel (5) ausgeübten Druckes regulierbar ist.

10. Überdruckventil, enthaltend:
- eine Einlasskammer (21) mit wenigstens einer ersten Ablassöffnung (22);
- eine Regelkammer (23), die mit der Einlasskammer (21) in Verbindung steht;
- einen Verschluss (24), angeordnet zwischen der Einlasskammer (21) und der Regelkammer (23), welcher Verschluss (24) gleitbar ist durch die Wirkung eines Druckunterschiedes zwischen der Einlasskammer und der Regelkammer (23) zwischen einer geschlossenen Position, in welcher der Verschluss (24) die erste Ablassöffnung (22) verschliesst, und wenigstens einer geöffneten Position, in welcher der Verschluss (24) wenigstens teilweise die erste Ablassöffnung (22) öffnet;
- erste elastische Mittel (51), vorgesehen zum Schieben des Verschlusses (24) in Richtung der geschlossenen Position;
**dadurch gekennzeichnet, dass** es eine Steuervorrichtung nach wenigstens einem der vorstehenden Patentansprüche enthält.

11. Ventil nach Patentanspruch 10, **dadurch gekennzeichnet, dass** der Verschluss (24) dicht abschliessend im Inneren eines hohlen Körpers (25) gleitbar ist, der einen zylindrischen Hohlraum aufweist, wobei an einer seitlichen Wand (25a) des zylindrischen Hohlraums die erste Ablassöffnung (22) angeordnet ist.

12. Ventil nach Patentanspruch 10 oder 11, **dadurch gekennzeichnet, dass** in dem Verschluss (24) ein durchgehender Kanal (29) aufgewiesen ist, um die Einlasskammer (21) mit der Regelkammer (23) in Verbindung zu setzen.

13. Ventil nach wenigstens einem der Patentansprüche von 10 bis 12, **dadurch gekennzeichnet, dass** die elastischen Mittel (51) im Inneren der Regelkammer (23) zwischen einem in dem Verschluss (24) aufgewiesenen Sitz (28) und einer unteren Oberfläche (12a) eines geformten Körpers (12) angeordnet ist.

14. Ventil nach wenigstens einem der Patentansprüche von 7 bis 13, **dadurch gekennzeichnet, dass** der hohle Körper (25) koaxial dem geformten Körper (12) auf solche Weise zugeordnet ist, dass die Regelkammer (23) durch eine untere Oberfläche (12a) des geformten Körpers (12), durch die seitliche Oberfläche (25a) des zylindrischen Hohlraums des hohlen Körpers (25) und durch den Verschluss (24) abgegrenzt ist.

15. Hydraulische Vorrichtung zum Ausüben einer Kraft, enthaltend einen Hydrauliktrieb (31), welcher Hydrauliktrieb (31) wenigstens eine erste Kammer (31 a) und eine zweite Kammer (31 b) enthält, sowie eine erste Leitung (32) zum Fördern und Ablassen einer unter Druck stehenden Flüssigkeit an die erste Kammer (31 a), und eine zweite Leitung (33) zum Fördern und Ablassen einer unter Druck stehenden Flüssigkeit an die zweite Kammer (31b), wobei die zweite Leitung mit einem Rückschlagventil (34) versehen ist, stromabwärts von welchem, bezugnehmend auf die Richtung des Abfliessens der Flüssigkeit aus der zweiten Kammer (31b), sich die zweite Leitung (33) teilt in eine erste Zweigleitung (33a), welche sich mit der ersten Leitung (32) verbindet, und in eine zweite Zweigleitung (33b), welche sich mit einem Verteiler (36) verbindet, **dadurch gekennzeichnet, dass** sie ein Überdruckventil (35) nach wenigstens einem der Patentansprüche von 10 bis 14 enthält, angeordnet an der zweiten Zweigleitung (33b) der zweiten Leitung (33).

## Revendications

1. Dispositif pour commander la pression, en particulier mais pas exclusivement pour le pilotage hydraulique d'une valve de surpression, comprenant:
- un canal d'échappement (2) s'étendant entre une chambre contrôlée (23) et au moins une ouverture d'échappement (3), en mettant la chambre contrôlée (23) et l'ouverture d'échappement (3) en communication réciproque;
- un piston (4) coulissant le long du canal d'échappement (2) entre au moins une position fermée du piston (4), dans laquelle le piston (4) obstrue le canal d'échappement (2) et au moins une position ouverte, dans laquelle le canal d'échappement (2) est ouvert et permet un flux de fluide de la chambre contrôlée (23) à l'ouverture d'échappement (3);
des moyens élastiques (5), prédisposés pour pousser le piston (4) vers la position fermée;
**caractérisé en ce que**: le piston (4) présente une première section transversale (6) qui, dans la position fermée du piston (4), obstrue le canal d'échappement (2) et est exposée à la pression présente à l'intérieur de la chambre contrôlée (23), et une seconde section transversale (7), ayant une surface plus grande que la première section transversale (6), qui dans la position fermée du piston (4) obstrue le canal d'échappement (2); la première section transversale (6) et la seconde section transversale (7) sont disposées de manière à ce que, pendant le coulissement du piston (4) de sa position fermée à sa position ouverte, la seconde section transversale (7) libère le canal d'échappement (2) successivement à la première section transversale (6).

2. Dispositif selon la revendication 1, **caractérisé en ce que** le piston (4) présente une première portion (8) qui, dans la position fermée du piston (4), est prédisposée pour venir en butée contre un logement d'étanchéité (9) interne au canal d'échappement (2) de manière à définir la première section transversale (6), alors que dans la position ouverte du piston (4) la première portion est espacée du logement d'étanchéité (9).

3. Dispositif selon la revendication 2, **caractérisé en ce que** la première portion (8) présente une conformation conique et est disposée de manière à ce qu'un sommet de la conformation conique soit positionné au travers du logement d'étanchéité (9).

4. Dispositif selon n'importe laquelle des revendications précédentes, **caractérisé en ce que** le piston (4) présente une seconde portion (10) ayant une conformation cylindrique, laquelle seconde portion (10) est coulissante de manière étanche à l'intérieur d'une zone du canal d'évacuation (2) et est pourvue d'un bord frontal (11) qui coulisse en contact avec la surface latérale du canal d'échappement (6) et délimite la seconde section transversale (7).

5. Dispositif selon la revendication 4, **caractérisé en ce que** la seconde portion (10) du piston (4) est conformée de manière à ce que, dans la position fermée du piston (4), la seconde portion (10) ferme l'ouverture d'échappement (3), alors que dans la position ouverte du piston (4) la seconde portion (10) libère l'ouverture d'échappement (3).

6. Dispositif selon la revendication 5, **caractérisé en ce que** la seconde portion (10) du piston (4) est associée à la première portion (8) au moyen d'une tige, une longueur de laquelle tige étant telle que, dans la position fermée du piston (4), une distance minimum séparant l'ouverture d'échappement (3) du logement d'étanchéité (9) soit supérieure à une distance séparant le bord frontal (11) du logement d'étanchéité (9).

7. Dispositif selon n'importe laquelle des revendications 2 à 6, **caractérisé en ce que** le canal d'échappement (2) est formé à l'intérieur d'un corps profilé (12) ayant une forme axial-symétrique, et comprend une première zone (2a) terminant par la chambre contrôlée (23), une seconde zone (2b), contigüe à la première zone (2a) et ayant une section supérieure à cette dernière, et une troisième zone (2c), contigüe à la seconde zone (2b) et ayant une section supérieure à cette dernière, et séparée de la seconde zone (2b) par le logement d'étanchéité (9).

8. Dispositif selon une au moins des revendications précédentes, **caractérisé en ce que** l'au moins une ouverture d'échappement (3) est disposée sur la surface latérale du canal d'échappement (2).

9. Dispositif selon au moins une des revendications précédentes, **caractérisé en ce qu'**une intensité d'une poussée exercée par les moyens élastiques (5) est réglable.

10. Valve de surpression, comprenant:
- une chambre d'entrée (21) ayant au moins une première ouverture d'échappement (22);
- une chambre contrôlée (23) en communication avec la chambre d'entrée (21);
- un obturateur (24) disposé entre la chambre d'entrée (21) et la chambre contrôlée (23), lequel obturateur (24) est coulissant sous l'effet d'une différence de pression entre la chambre d'entrée et la chambre contrôlée (23) entre une position fermée, dans laquelle l'obturateur (24) ferme la première ouverture d'échappement (22), et au moins une position ouverte, dans laquelle l'obturateur (24) ouvre au moins partiellement la première ouverture d'échappement (22);
- des premiers moyens élastiques (51), prédisposés pour pousser l'obturateur (24) vers la position fermée;
**caractérisé en ce qu'**il comprend un dispositif pilote selon au moins l'une des revendications précédentes.

11. Valve selon la revendication 10, **caractérisée en ce que** l'obturateur (24) est coulissant de manière étanche à l'intérieur d'un corps creux (25) présentant une cavité cylindrique, sur une paroi latérale (25a) de laquelle est disposée la première ouverture d'échappement (22).

12. Valve selon la revendication 10 ou 11, **caractérisée en ce qu'**un canal passant (29) est présent dans l'obturateur (24) pour mettre la chambre d'entrée (21) en communication avec le canal contrôlé (23).

13. Valve selon au moins l'une des revendications 10 à 12, **caractérisée en ce que** les moyens élastiques (51) sont disposés à l'intérieur du canal contrôlé (23) entre un logement (28) présenté dans l'obturateur (24) et une surface de fond (12a) d'un corps profilé (12).

14. Valve selon au moins l'une des revendications 7 à 13, **caractérisée en ce que** le corps creux (25) est associé coaxialement au corps profilé (12) de manière à ce que la chambre contrôlée (23) soit délimitée par une surface de fond (12a) du corps profilé (12), par la surface latérale (25a) de la cavité cylindrique du corps creux (25), et par l'obturateur (24).

15. Dispositif hydraulique pour exercer une force, comprenant un actionneur hydraulique (31), lequel actionneur hydraulique (31) comprend au moins une première chambre (31a) et au moins une seconde chambre (31b), un premier conduit (32) pour envoyer et évacuer un fluide pressurisé vers la première chambre (31a), un second conduit (33) pour envoyer et évacuer un fluide pressurisé vers la seconde chambre (31b), le second conduit étant pourvu d'une valve de retenue (34) en aval de laquelle, en référence à un écoulement du fluide provenant de la seconde chambre (31b), le second conduit (33) se divise en une première branche (33a), qui se joint au premier conduit (32), et en une seconde branche (33b), qui se joint à un distributeur (36), **caractérisé en ce qu'**il comprend une valve de surpression (35) selon au moins l'une des revendications 10 à 14, disposée sur la seconde branche (33b) du second conduit (33).
